# EUROPÄISCHE PATENTANMELDUNG

(11) **EP 1 136 786 A1**
(43) Veröffentlichungstag der Anmeldung: **26.09.2001**
(21) Anmeldenummer: 00106232.2
(22) Anmeldetag: 22.03.2000
(51) Int. Cl.: G01B 5/06

(54) **Anlage zur Messung der Wandstärke von Glasbehältern mit stetigem Umfangsverlauf**

(71) Anmelder: Gürzenich, Dirk, Dipl.-Ing., 44534 Lünen (DE)
(72) Erfinder: Gürzenich, Dirk, Dipl.-Ing., 44534 Lünen (DE)
(74) Vertreter: Henfling, Fritz, Dipl.-Ing.

(57) **Zusammenfassung**

Bei einer Anlage zur Messung der Wandstärke von Glasbehältern mit stetigem Umfangsverlauf, bestehend aus einem sich entlang einer von einem Förderband unterlaufenen Plattform erstreckenden, über die Plattform vorspringenden, auf die Wandstärke der Glasbehälter ansprechenden Meßkopf und einem sich parallel zum Meßkopf erstreckend dem Meßkopf gegenüberliegenden, umlaufenden, die mit ihrer Standfläche auf der Plattform aufsitzenden Glasbehälter unter Vermittlung einer Drehbewegung durch den Meßbereich transportierenden Treibriemen, wird das dem Meßkopf gegenüberliegende Riementrum (321') von einer sich zwischen den Umlenkrollen für den Treibriemen (321) erstreckenden Abstützung (61) ingestalt eines elastisch verformbaren Bandabschnitts hinterfangen, das sich an in dichter Abfolge vorgesehenen Plungerzylindern (63) abstützt, in deren Kopfplatten (632) sich Abstützung (61) und Treibriemen (321) führen, wobei die Abstützung (61) lediglich einlaufseitig, beispielsweise an der Kopfplatte (632), des einlaufseitigen Plungerzylinders (63), fixiert ist (62).

## Beschreibung

Die Erfindung betrifft eine Anlage zur Messung der Wandstärke von Glasbehältern mit stetigem Umfangsverlauf. Eine solche in der DE 198 22 550 A1 beschriebene Anlage besteht aus einem sich entlang einer von einem Förderband unterlaufenen Plattform erstreckenden, über die Plattform vorspringenden, auf die Wandstärke der Glasbehälter ansprechenden Meßkopf und einem sich parallel zum Meßkopf erstreckenden, dem Meßkopf gegenüberliegenden, umlaufenden, die mit ihrer Standfläche auf der Plattform aufsitzenden Glasbehälter unter Vermittlung einer Drehbewegung durch den Meßbereich transportierenden Treibriemen mit der Möglichkeit der Einstellbarkeit des Abstandes zwischen Meßkopf und Treibriemen auf den kleinsten Radius des der Messung zu unterziehenden Glasbehälter-Typs, wobei das dem Meßkopf gegenüberliegende Riementrum von einer sich zwischen den Umlenkrollen für den Treibriemen erstreckenden Abstützung aus elastisch verformbarem Material hinterfangen ist, auf die auf der vom Meßkopf abgekehrten Seite in regelmäßigen Abständen gegen die ihnen innewohnende Andruckkraft eine Auslenkung der Abstützung entsprechend dem sich beim Drehen des Glasbehälters ändernden wirksamen Radius des Glasbehälters nach der vom Meßkopf abgekehrten Seite hin zulassende Puffer einwirken.

Der aus einem Federstahl-Bandabschnitt bestehenden, den die zu überprüfenden Glasbehälter durch die Meßanlage transportierenden Treibriemen hinterfangenden, sich in größeren Abständen an den Puffern abstützenden, beidends der Meßstrecke um Umlenkrollen geführten, einen Ends fixierten Abstützung wird hierbei ihre gestreckte Ausgangslage durch auf sie anderen Ends einwirkende Federkraft vermittelt.

Die der Erfindung zugrundeliegende Aufgabe ist es, dem Stand der Technik gegenüber eine einfachere konstruktive Lösung zu entwickeln, die dann auch in der Lage ist, noch detailliertere Meßergebnisse zu vermitteln.

Die Aufgabe wird erfindungsgemäß mit einer gattungsgemäßen Anlage zur Messung der Wandstärke von Glasbehältern mit stetigem Umfangsverlauf gelöst, die durch folgende Merkmale gekennzeichnet ist:
die lediglich einlaufseitig fixierte Abstützung aus elastisch verformbarem Material ist in dichter Abfolge von Plungerzylindern hinterfangen,
deren Kolbenstange mit einer Kopfplatte versehen ist,
die einen Rücksprung aufweist, in dem sich Abstützung und Treibriemen führen.

Ausgestaltungen der Erfindung ergeben sich aus den Unteransprüchen 2 bis 8.

Der Fortfall der Umlenkrollen, die nach dem Stand der Technik erforderlich sind, um der den Treibriemen hinterfangenden Abstützung ihre unter auf sie einwirkender Zugspannung gestreckte Ausgangslage zu vermitteln, erbringt nicht nur eine konstruktiv einfachere Lösung, damit ist dann auch die Möglichkeit eröffnet, den sich daraus ergebenden Freiraum hinter der Abstützung für die Installation von zusätzlichen Kontroll- bzw. Meßeinrichtungen zu nutzen.

In der Zeichnung ist die Erfindung weitergehend erläutert. Es zeigen:
- Figur 1: die schematische Darstellung einer Wandstärken-Meßanlage nach dem Stand der Technik in Draufsicht,
- Figur 1a: einen Horizontalschnitt durch einen der Messung zu unterziehenden Glasbehälter,
- Figur 2: das Bestandteil der bekannten Meßanlage bildende, auf den die Glasbehälter durch die Meßanlage transportierenden Treibriemen einwirkende Andruckelement in größerem Maßstab,
- Figur 3: die erfindungsgemäße Wandstärkenmeßanlage in einer der Figur 1 entsprechenden Darstellung,
- Figur 4: das die Meßanlage nach Figur 3 erfindungsgemäß ausgestaltende Andruckelement in größerem Maßstab,
- Figur 5: einen der Bestandteil des Andruckelements nach den Figuren 3 und 4 bildenden Plungerzylinder in Seitenansicht
- Figur 6: einen Vertikalschnitt durch den Bestandteil der Meßstrecke bildenden Meßkopf.

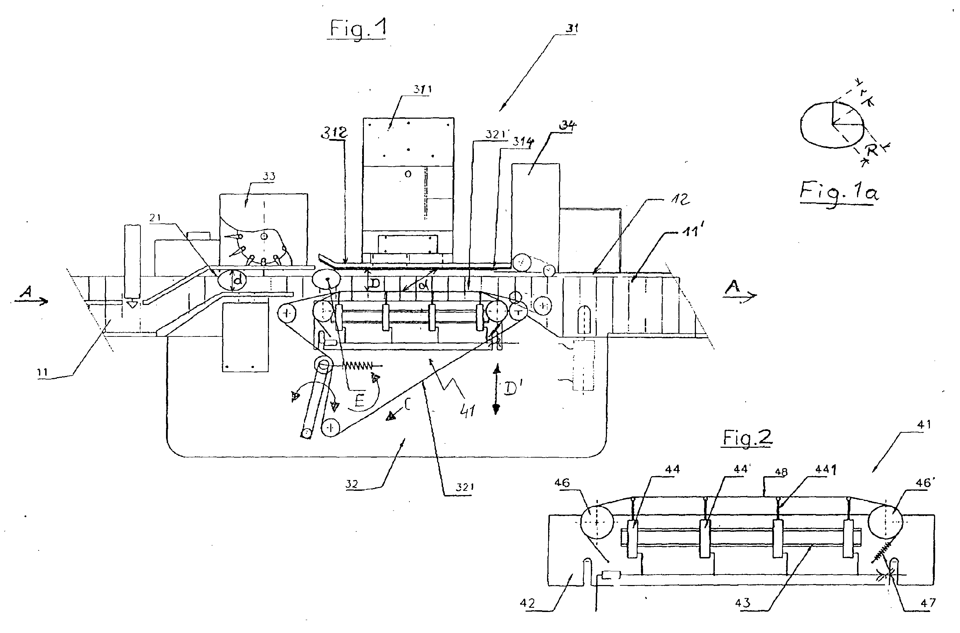

Die in Figur 1 dargestellte Wandstärkenmeßanlage 31 nach dem Stand der Technik ist in eine Förderstrecke 11, 11' eingefügt, auf der die zu überprüfenden Glasbehälter 21 im Sinne der Pfeile A, A' an- und abtransportiert werden, die den Bereich der Anlage 31 auf einer vom Förderband 11, 11' unterfahrenen Plattform 12 durchlaufen. Herzstück der Anlage ist die sogenannte Meßstation 311 mit dem die Plattform 12 an der ihr zugewandten Längskante eingrenzenden Meßkopf 312, an dem die zu überprüfenden Glasbehälter 21 unter der Einwirkung eines Bestandteil der gegenüberliegenden Treibvorrichtung 32 bildenden, parallel zum Meßkopf 312 auf den kleinen Radius r der die Anlage durchlaufenden Glasbehälter 21 (Figur 1a) entsprechenden Abstand d = 2r vom Meßkopf 312 verlaufenden, im Sinne des Pfeiles C umlaufenden Treibriemens 321 eine Drehbewegung im Sinne des Pfeiles E ausführend entlanggleiten. Die Länge des Meßkopfes 312 stellt die Wandstärkenüberprüfung der Glasbehälter 21 über ihren gesamten Umfang sicher. Damit auch Glasbehälter mit einem zwar stetigen jedoch nicht vollrunden Umfangsverlauf überprüft werden können, ist nach dem Stand der Technik in die Treibvorrichtung 32 das im Detail aus Figur 2 entnehmbare Element 41 integriert. Das Element 41 besteht aus einem in der Treibvorrichtung 32 einzubauenden Träger 42 mit einer aus ihm vorspringenden Schiene 43, auf der druckmittelbeaufschlagte Plungerzylinder 44 beabstandet gelagert sind, deren Kolbenstange 441 über den Träger 42 vorspringen. Die Kolbenstangen 441 stützen sich an einem sich stangenseitig über die Länge des Trägers 42 erstreckenden, um Umlenkrollen 46, 46' geführten, unter Zugspannung (47) stehenden Federstahlband 48 ab. Im in den Antriebsblock 32 in der aus Figur 1 ersichtlichen Weise eingebauten Zustand des Elementes 41 hinterfängt das Federstahlband 48 das mit den die Anlage durchlaufenden Glasbehältern 21 in Wechselwirkung tretenden Trum 321' des Treibriemens 321, dem so die Anstellbeweglichkeit im Sinne des Doppelpfeiles D vermittelt wird, die die Möglichkeit der kontinuierlichen Anpassung des dem kleinen Radius der Glasbehälter (Figur 1a) entsprechenden Abstandes d (Figur 1) zwischen dem Meßkopf 312 und dem Trum 321' des Treibriemens 321 an die sich kontinuierlich ändernden Radien r → R → r bzw. Durchmesser der die Anlage durchlaufenden Glasbehälter 21 mit stetigen jedoch unrunden Umfangsverlauf eröffnet und damit die Überprüfung auch solcher Glasbehälter auf ihre Wandstärke. Mit 33 ist das einlaufseitig vorgesehene Vereinzelungsaggregat bezeichnet, das sicherstellt, daß die zu überprüfenden Glasbehälter 21 die Anlage beabstandet durchlaufen, mit 34 das auslaufseitig befindliche, von der Meßstation 311 von Fall zu Fall aktivierte Auswurfaggregat zum Aussondern bei der Messung festgestellter Glasbehälter mit von den zulässigen Toleranzen abweichenden Wandstärkenbereichen. Die Verlagerbarkeit des Elementes 41 als Ganzes gegenüber dem Meßkopf 312 im Sinne des Doppelpfeiles D' in Figur 1 ermöglicht die Anpassung der Meßanlage an unterschiedliche Formate der die Anlage durchlaufenden Glasbehälter.

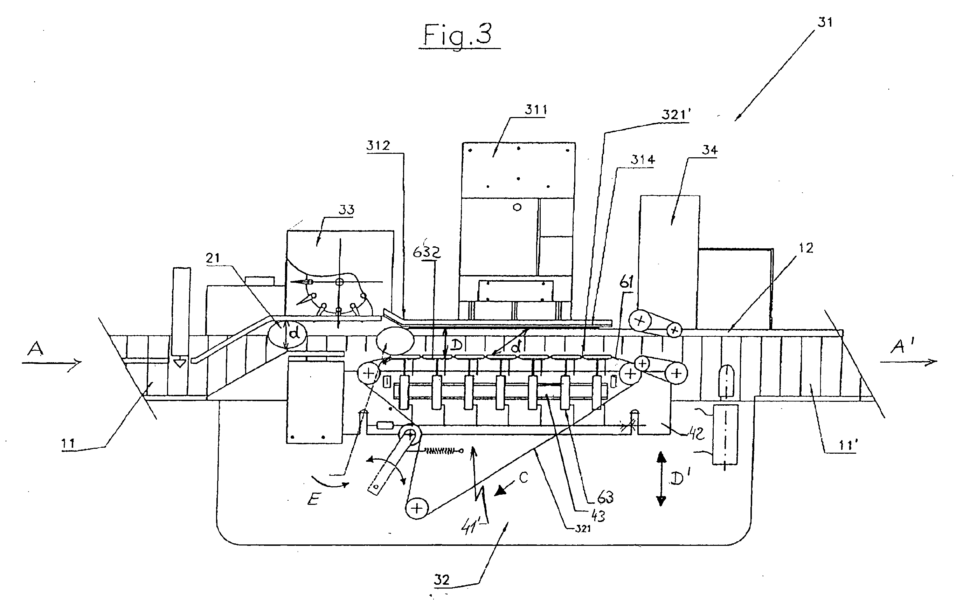

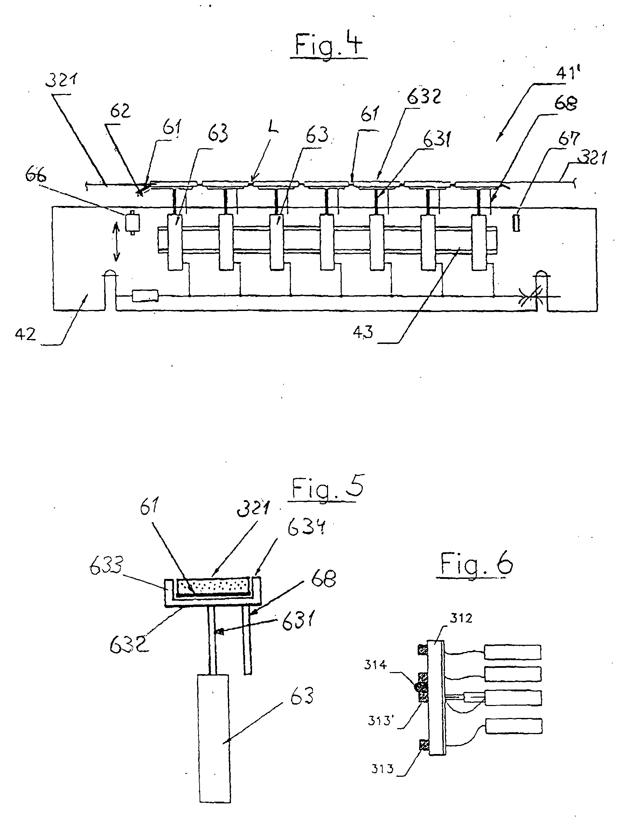

In der in den Figuren 3 bis 5 wiedergegebenen, erfindungsgemäßen Ausgestaltung der Meßanlage sind für übereinstimmende konstruktive Elemente dieselben, aus den den Stand der Technik wiedergebenden Figuren 1 und 2 entnehmbaren Bezugsziffern verwendet. Wie insbesondere aus der das weiterentwickelte Element 41' wiedergebenden Figur 4 zu entnehmen ist, wird das Trum 321' des die Glasbehälter 21 durch die Meßanlage transportierenden Treibriemens 321 erfindungsgemäß nunmehr von einer nur noch einlaufseitig fixierten (62) Abstützung 61 aus elastisch verformbarem Material, z.B. einem Stahlbandabschnitt, hinterfangen, die sich in Kopfplatten 632 der Kolbenstange 631 von geringfügig Luft L zwischen aneinander angrenzenden Kopfplatten 632 belassend in dichter Abfolge vorgesehenen Plungerzylindern 63 führt. Die Führung der Abstützung 61 und des Treibriemens 321 in den Kopfplatten 632 erfolgt durch eine U-profil-förmige Ausbildung der Kopfplatten, aus der die Randeinfassungen 633, 634 für Abstützung und Treibriemen resultieren (Figur 5). Hierbei entfallen also die nach dem Stand der Technik erforderlichen, die Abstützung hinterfangenden Umlenkrollen (46, 46' in Figur 2), dann auch die Einspannung der Abstützung. Hiermit ist auch Freiraum geschaffen, der die Möglichkeit eröffnet, eine zusätzliche Meßeinrichtung zu installieren, etwa eine aus Sender 66 und Empfänger 67 bestehende Lichtschranke, die durch von den Kopfplatten 632 der Kolbenstangen 631 der Plungerzylinder 63 ausgehende Unterbrecher 68 aktivierbar ist, so bei der Auslenkung der Abstützung entsprechend dem größten Durchmesser der zu überprüfenden Glasbehälter. Damit wird es möglich, in die den Auswurfmechanismus auslösende Auswertung durch die Meßstation Korrekturfaktoren einzubringen, weitergehend dann auch die Lage von Fehlstellen in auszusondernden bzw. ausgesonderten Glasbehältern zu identifizieren. Die Verlagerbarkeit des Senders 66 im Sinne des Doppelpfeiles G ermöglicht die Abstimmung beispielsweise der Lichtschranke auf das jeweilige Format der die Meßanlage durchlaufenden Glasbehälter.

Die Plungerzylinder, an denen sich Abstützung 61 und Treibriemen 321 abstützen, liegen an einem Druckbehälter. Als Druckmittel steht alternativ Druckluft oder Hydraulikflüssigkeit zur Verfügung. Die Andruckkraft ist einstell- bzw. regelbar. Den einwandfreien Durchlauf der die Meßanlage durchlaufenden Glasbehälter stellt eine aufgerauhte bzw. beschichtete Oberfläche des die Glasbehälter durch die Meßanlage tansportierenden Treibriemens sicher. Vorgesehen sein kann in diesem Zusammenhang weitergehend ein über die sich über die Länge des Meßkopfes 312 erstreckenden Meßstreifen 313, 313' vorspringender Streifen 314 aus elastisch nachgiebigem Material (Figur 6). Für die Abstützung 61 bieten sich Bandabschnitte aus korrosionsfestem Metall oder aber einem geeigneten dauerelastischen Kunststoff an. Abweichend von der aus Figur 4 entnehmbaren Ausführungsform können die Plungerzylinder 63 auch unmittelbar an dem Träger 42 angesetzt sein. Anstelle von Plungerzylindern können auch Differentialzylinder zum Einsatz kommen, woraus dann allerdings anlagenseitig höhere Kosten resultieren.

## Patentansprüche

1. Anlage zur Messung der Wandstärke von Glasbehältern mit stetigem Umfangsverlauf, bestehend aus einem sich entlang einer von einem Förderband unterlaufenen Plattform erstreckenden, über die Plattform vorspringenden, auf die Wandstärke der Glasbehälter ansprechenden Meßkopf und einem sich parallel zum Meßkopf erstrekkenden, dem Meßkopf gegenüberliegenden, umlaufenden, die mit ihrer Standfläche auf der Plattform aufsitzenden Glasbehälter unter Vermittlung einer Drehbewegung durch den Meßbereich transportierenden Treibriemen mit der Möglichkeit der Einstellbarkeit des Abstandes zwischen Meßkopf und Treibriemen in Abstimmung auf den Durchmesser des der Messung zu unterziehenden Glasbehälter-Typs, wobei das dem Meßkopf gegenüberliegende Riementrum von einem sich zwischen den Umlenkrollen für den Treibriemen erstreckenden Abstützung aus elastisch verformbarem Material hinterfangen ist, auf das auf der vom Meßkopf abgekehrten Seite in regelmäßigen Abständen gegen die ihnen innewohnende Andruckkraft eine Auslenkung der Abstützung nach der vom Meßkopf abgekehrten Seite hin zulassende Puffer einwirken, **gekennzeichnet durch** folgende Merkmale:
die lediglich einlaufseitig fixierte (62) Abstützung (61) aus elastisch verformbarem Material ist in dichter Abfolge von Plungerzylindern (63) hinterfangen,
deren Kolbenstange (631) mit einer Kopfplatte (632) versehen ist,
die einen Rücksprung aufweist, in dem sich Abstützung (61) und Treibriemen (321) führen.

2. Anlage nach Anspruch 1, **dadurch gekennzeichnet, daß** die Plungerzylinder (63) in einem Träger zusammengefaßt sind.

3. Anlage nach Anspruch 1 oder Anspruch 2, **dadurch gekennzeichnet, daß** die Plungerzylinder (63) an einen, eine einstellbare bzw. regelbare Andruckkraft vermittelnden gemeinsamen Druckbehälter angeschlossen sind.

4. Anlage nach einem der Ansprüche 1 bis 3, **dadurch gekennzeichnet, daß** die Plungerzylinder (63) Druckluftzylinder sind.

5. Anlage nach einem der Ansprüche 1 bis 4, **dadurch gekennzeichnet, daß** die Abstützung (61) an der sich darunter erstreckenden, einlaufseitigen Kopfplatte (632) fixiert ist.

6. Anlage nach einem der Ansprüche 1 bis 5, **dadurch gekennzeichnet, daß** die Abstützung (61) aus einem korrosionsfestem Metallband besteht.

7. Anlage nach einem der Ansprüche 1 bis 5, **dadurch gekennzeichnet, daß** die Abstützung (61) aus dauerelastischem Kunststoff besteht.

8. Anlage nach einem der Ansprüche 1 bis 7, **gekennzeichnet durch** eine unterhalb der Abstützung (61) außerhalb der Plungerzylinderanordnung installierte Lichtschranke (66, 67) und von den Kopfplatten (632) der Kolbenstangen (631) der Plungerzylinder (63) außerhalb der Plungerzylinder (63) selbst ausgehende Unterbrecher (68).
